# EUROPÄISCHE PATENTSCHRIFT

(11) **EP 1 957 685 B1**
(45) Veröffentlichungstag und Bekanntmachung des Hinweises auf die Patenterteilung: **17.09.2014**
(21) Anmeldenummer: 06807675.1
(22) Anmeldetag: 31.10.2006
(51) Int. Cl.: C22C 19/05, B23K 31/00, B23K 35/30

(54) **VERFAHREN ZUM REPARIEREN VON RISSEN IN BAUTEILEN**
METHOD FOR REPAIRING CRACKS IN COMPONENTS
PROCEDE DE REPARATION DE FISSURES DANS DES COMPOSANTS

(30) Priorität: 28.11.2005 EP 05025898
(43) Veröffentlichungstag der Anmeldung: 20.08.2008
(73) Patentinhaber: Siemens Aktiengesellschaft, 80333 München (DE); MTU Aero Engines AG, 80995 München (DE)
(72) Erfinder: VOLEK, Andreas, 91074 Herzogenaurach (DE)
(86) Internationale Anmeldenummer: PCT/EP2006/067951
(87) Internationale Veröffentlichungsnummer: WO 2007/060080

(56) Entgegenhaltungen:
- EP-A- 1 258 545
- EP-A- 1 561 536
- WO-A-95/35396
- WO-A-2005/028690
- US-A- 3 632 319
- US-A- 5 320 690
- US-A- 6 050 477
- BRADLEY E F ED - BRADLEY E F: "Superalloys A Technical Guide, WELDING", 1 January 1988 (1988-01-01), SUPERALLOYS. TECHNICAL GUIDE, METALS PARK, ASM INTERNATIONAL, US, PAGE(S) 197 - 199,201,207,212, XP002361607,

## Beschreibung

Die vorliegende Erfindung betrifft ein Verfahren zum Reparieren von Rissen in Bauteilen, die aus einer Superlegierung bestehen, insbesondere aus einer Superlegierung mit einer gerichteten Mikrostruktur, wobei das Verfahren dann insbesondere derart ausgestaltet ist, dass ein reparierter Riss eben-falls eine gerichtete Mikrostruktur aufweist.

Die Verbesserung von Flugzeuggasturbinen und die elektrische Energieerzeugung mittels stationärer Gasturbinen rückt aufgrund der mit den Gasturbinen realisierbaren hohen Wirkungsgrade immer mehr in den Vordergrund. In einer Gasturbine wird angesaugte Luft verdichtet und einer Brennkammer zugeführt. In der Brennkammer wird ein Gemisch aus der zugeführten Luft und einem Brennstoff gezündet und die unter hohem Druck stehenden heißen Verbrennungsabgase einem Turbinenabschnitt der Gasturbine zugeleitet. Die Verbrennungsabgase dienen dabei als Arbeitsmedium, welches die Turbine in Rotation, typischerweise mit einer Frequenz von 50 bis 60 Hz, versetzt. Das Arbeitsmedium tritt hierbei mit einer Temperatur von rund 1200°C auf die ersten Turbinenschaufeln auf. In Folge der Rotation sind die heißen Turbinenschaufeln hohen statischen Lasten durch Fliehkräfte ausgesetzt. Zudem werden durch das einströmende heiße Gas dynamische Lasten hervorgerufen. Je nach verwendetem Brennstoff kommen zudem mehr oder minder starke korrosive Belastungen auf die Bauteile des Turbinenabschnittes, insbesondere auf die Turbinenschaufeln zu.

Beispielsweise die Laufschaufeln der ersten Laufschaufelreihe der Turbine werden deshalb häufig aus sog. hochwarmfesten Superlegierungen auf Nickel-, Kobalt- oder Eisenbasis hergestellt. Solche Superlegierungen sind beispielsweise aus der EP 1 204 776 B1, der EP 1 306 454, der EP 1 319 729 A1, der WO 99/67435 oder der WO 00/44949 bekannt.

Aufgrund des üblicherweise äußerst komplexen Schaufeldesigns und der relativ geringen Eignung derartiger Legierungen zum Umformen, erfolgt die Herstellung von Turbinenschaufeln im Vakuumgießverfahren. Der Erstarrungsablauf wird dabei so gesteuert, dass eine gerichtete Mikrostruktur im Bauteil entsteht, die gegenüber den später auftretenden Lasten eine besonders vorteilhafte Orientierung aufweist. Unter dem Begriff "gerichtete Mikrostruktur" sind sowohl einkristalline·Strukturen als auch Strukturen mit einer Kornstruktur, in der die Ausdehnung der Körner eine gemeinsame Vorzugsrichtung aufweist, anzusehen. Im letztgenannten Fall können die Körner beispielsweise in einer bestimmten Vorzugsrichtung eine größere Abmessung aufweiten als in den übrigen Richtungen (sog. Stängelkristalle). Bauteile mit einer derartigen Kornstruktur werden auch als gerichtet erstarrte Bauteile (directionally solidified) bezeichnet.

Die ständigen hohen statischen und dynamischen Lasten von Turbinenbauteilen und insbesondere von Laufschaufeln des Turbinenabschnittes, führen dazu, dass diese in regelmäßigen Abständen einer Revision unterzogen werden, um sie auf ihre Eignung für einen weiteren Einsatz hin zu begutachten. Beschädigte Bauteile werden im Rahmen dieses Revisionsprozesses entweder ausgetauscht oder repariert. Neben starken Materialverlusten durch Korrosion sind insbesondere Ermüdungsrisse die am häufigsten auftretenden Ursachen für einen Austausch der Bauteile. Insbesondere bei Laufschaufeln treten derartige Ermüdungsrisse quer zur Schaufellängsachse auf.

Aufgrund der hohen Material- und Herstellungskosten für Turbinenbauteile mit einer gerichteten Mikrostruktur muss ein Kraftwerksbetreiber oder ein Hersteller für Flugzeuggasturbinen für die Instandhaltung einer Gasturbinenanlage relativ hohe Kosten, bspw. für den Austausch von Turbinenschaufeln, einkalkulieren. Vor dem Hintergrund eines steigenden Kostendruckes werden daher Reparaturverfahren, welche die Betriebsfähigkeit eines beschädigten Turbinenbauteils, insbesondere einer beschädigten Laufschaufel, wieder herstellen, zunehmend attraktiver. Ein repariertes Bauteil kann dann wieder in die Gasturbinenanlage eingebaut werden und einen weiteren Einsatz bis zum nächsten Revisionsprozess erfahren.

Eine Möglichkeit, beschädigte Bauteile zu reparieren ist das Löten. Dabei wird ein Lotmaterial beispielsweise in einen Riss im Bauteil eingebracht und mittels Wärmeeinwirkung mit dem Material der Superlegierung verbunden. Der Lötprozess kann isotherm, also bei konstanter Temperatur, oder unter Verwendung eines Temperaturgradienten erfolgen.

Ein Verfahren zum Isothermen Hartlöten von einkristallinen Gegenständen ist beispielsweise in EP 1 258 545 beschrieben. Darin wird ein Lotmaterial, welches in seiner Zusammensetzung der Superlegierung des Bauteils ähnelt, in einen Riss eingefüllt und über einen längeren Zeitraum auf eine Temperatur oberhalb des Schmelzpunktes des Lotmaterials gehalten. Dem Lotmaterial ist Bor zur Absenkung der Schmelztemperatur beigefügt. Aufgrund der hohen Temperatur finden Diffusionsprozesse statt, die dazu führen, dass ein Konzentrationsausgleich zwischen dem Lotmaterial und der Superlegierung herbeigeführt wird, die zu einem Erstarren des Lotmaterials führt. Dabei nimmt das erstarrte Lotmaterial bei Spaltbreiten bis ca. 200 µm die gerichtete Mikrostruktur der umgebenden Superlegierung an. Das Bor kann jedoch zur Bildung spröder Boride führen, welche die Eigenschaften des Bauteils im Bereich der reparierten Stelle beeinträchtigen. Außerdem ist das Verfahren für Spaltbreiten über ca. 200 µm nicht geeignet.

Die Bildung von Boriden ist bspw. thematisiert in S. K. Tung et al. "Evolution of nickel borides in Ni-Si-B brazed joints of nickel during post-braze heat treatment", Materials Science and Technology, Dec. 1997, Vol. 13, pages 1051 - 1056.

Ein Verfahren zum Löten von gerichtet erstarrten oder einkristallinen Komponenten unter Verwendung eines Temperaturgradienten ist beispielsweise in EP 0 870 566 beschrieben. In diesem Verfahren wird auf die zu reparierende Stelle eine Lotlegierung aufgelegt, die beispielsweise aus dem Grundwerkstoff des zu reparierenden Teiles und einer Zugabe eines oder mehrerer den Schmelzpunkt reduzierender zusätzlicher Elemente besteht. Als den Schmelzpunkt erniedrigende Elemente sind Bor und Silizium genannt. Das zu reparierende Teil wird mit der aufgelegten Lotlegierung durch eine beheizte Zone bewegt, wobei in dieser beheizten Zone die durch die Heizung aufgebrachte Temperatur über der Schmelztemperatur der Lotlegierung liegt, aber kleiner als die örtliche Voraufschmelztemperatur des Teiles ist. Dadurch kommt es nicht zum partiellen Aufschmelzen der Superlegierung des zu reparierenden Teiles. Aufgrund der Bewegung wird im Lötgut ein thermischer Gradient erzeugt, der zu einer gerichteten Erstarrung des Lötgutes führt. Auch in diesem Fall werden dem Lötgut schmelzpunktherabsetzende Komponenten hinzugefügt, die, beispielsweise im Falle von Bor, die Eigenschaften der reparierten Stelle negativ beeinflussen können.

Lotmaterialien, welche Bor enthalten sind bspw. auch in US 3 632 319, GB 2 162 199 A und in EP 0 100 919 A1 beschrieben.

Die EP 0 908 265 A2 beschreibt ein Lotmaterial auf Nickelbasis, welches man durch Hinzufügen wenigstens einer der folgenden Komponenten zu einem Nickelpulver erhält: Nickel, Chrom, Nickel-Chrom-Legierungen und Edelstahl.

Aufgabe der vorliegenden Erfindung ist es; ein gegenüber dem Stand der Technik vorteilhaftes Verfahren zum Reparieren von Bauteilen, die aus einer Superlegierung bestehen, insbesondere aus einer Superlegierung mit einer gerichteten Mikrostruktur, zur Verfügung zu stellen.

Es ist eine weitere Aufgabe der vorliegenden Erfindung, ein gelötetes Bauteil zur Verfügung zu stellen.

Die erste Aufgabe wird durch ein Verfahren zum Reparieren von Bauteilen nach Anspruch 1 gelöst, die zweite Aufgabe durch ein gelötetes Bauteil nach Anspruch 8.

Die abhängigen Ansprüche enthalten vorteilhafte Ausgestaltungen des erfindungsgemäßen Verfahrens.

Im erfindungsgemäßen Verfahren erfolgt ein Reparieren von Bauteilen, die aus einer Superlegierung bestehen. Insbesondere kann die Superlegierung eine gerichtete Mikrostruktur aufweisen, wobei das Verfahren dann insbesondere derart ausgestaltet ist, dass eine reparierte Stelle ebenfalls eine gerichtete Mikrostruktur aufweist. Unter einer gerichteten Mikrostruktur soll im Rahmen der vorliegenden Anmeldung eine einkristalline oder eine stängelkristalline Struktur zu verstehen sein.

Das Verfahren umfasst die Schritte:
- Versehen der zu reparierende Stelle mit einem Lotmaterial,
- Erwärmen der mit dem Lotmaterial versehenen zu reparierenden Stelle bis zum Schmelzen des Lotmaterials und
- Erstarrenlassen des geschmolzenen Lotmaterials.

Im erfindungsgemäßen Verfahren ist das Lotmaterial eine Legierung, welche dieselben Legierungskomponenten wie die Legierung des Bauteils aufweist. Dabei ist wenigstens der Anteil einer Legierungskomponente an der Zusammensetzung des Lotmaterials gegenüber seinem Anteil an der Zusammensetzung der Legierung des Bauteils derart abgeändert, dass die Schmelztemperatur des Lotmaterials gegenüber der Schmelztemperatur der Legierung des Bauteils abgesenkt ist.

Das Erfindungsgemäße Verfahren ermöglicht den Verzicht auf zusätzliche, den Schmelzpunkt absenkende Elemente, insbesondere den Verzicht auf Bor oder Silizium, welche zu den eingangs genannten spröden Phasen führen können. Das erfindungsgemäße Verfahren ermöglicht insbesondere das Absenken der Schmelztemperatur von Lotmaterialien für Superlegierungen auf Nickel-, Kobalt- oder Eisenbasis, die wenigstens eines der Elemente Al (Aluminium), Ti (Titan), Ta (Tantal), Cr (Chrom), Co (Kobalt), Mo (Molybdän), W (Wolfram), Nb (Niob) als Hauptlegierungselemente umfassen. Das Absenken der Schmelztemperatur des Lotmaterials gegenüber der Schmelztemperatur der Superlegierung lässt sich bspw. erreichen, wenn der Anteil wenigstens eines der Elemente Al, Ti, Ta, Nb an der Legierung des Lotmaterials gegenüber seinem Anteil an der Superlegierung erhöht ist und/oder der Anteil des Elementes W an der Legierung des Lotmaterials gegenüber seinem Anteil an der Superlegierung verringert ist. Vorzugsweise wird auch nur Al und Ti verwendet.

wenn die Superlegierung die folgende Zusammensetzung aufweist: 2 bis 16 Gew.-% Cr; 0 bis 15 Gew.-% Co; 0 bis 3 Gew.-% Mo; 0 bis 10 Gew.-% W; 0 bis 12 Gew.-% Ta; 0 bis 6 Gew.-% Re (Rhenium); 0 bis 1 Gew.-% V (Vanadium); 0 bis 0,5 Gew.-% Nb; 0,05 bis 6,5 Gew.-% Al; 0 bis 5 Gew.-% Ti; 0 bis 0,2 Gew.-% Hf (Hafnium); Rest Ni, dann können in der Legierung des Lotmaterials bspw. die Anteile an Ta und Ti gegenüber der Zusammensetzung der Superlegierung erhöht sein, um die Schmelztemperatur des Lotmaterials gegenüber der Schmelztemperatur der Superlegierung abzusenken.

Das Erstarrenlassen des geschmolzenen Lotmaterials kann bei konstant gehaltener Temperatur erfolgen, also in Form eines Isothermen Erstarrens. Alternativ ist es auch möglich, das geschmolzene Lotmaterial unter Verwendung eines Temperaturgradienten erstarren zu lassen. Der Temperaturgradient ist vorteilhafterweise derart ausgerichtet, dass er in derjenigen Richtung verläuft, in der die gerichtete Mikrostruktur des Bauteils im Bereich der zu reparierenden Stelle verläuft. Zum Erzeugen des Temperaturgradienten eignen sich unterschiedliche Heizverfahren. Insbesondere kann ein lokales Heizen mittels eines optischen oder induktiven Heizverfahrens oder mittels eines Elektronenstrahlheizverfahrens erfolgen, wobei die Heizquelle und das Bauteil relativ zueinander bewegt werden. In dieser Ausgestaltung kann die Orientierung der Mikrostruktur im verfestigten Lotmaterial durch die Bewegungsrichtung zwischen der Heizquelle und dem Bauteil festgelegt werden.

Ein erfindungsgemäßes Lotmaterial zum Löten von Bauteilen, die aus einer Superlegierung bestehen, insbesondere aus einer Superlegierung mit einer gerichteten Mikrostruktur, ist eine Legierung mit denselben Legierungskomponenten wie die Legierung des Bauteils. In dem erfindungsgemäßen Lotmaterial ist wenigstens der Anteil einer Legierungskomponente an der Zusammensetzung des Lotmaterials gegenüber seinem Anteil an der Zusammensetzung der Legierung des Bauteils derart abgeändert, dass die Schmelztemperatur des Lotmaterials gegenüber der Schmelztemperatur der Legierung des Bauteils abgesenkt ist. Dadurch kann auf den Schmelzpunkt absenkende Elemente im Lot, welche zu den eingangs genannten spröden Phasen führen können insbesondere auf Bor oder Silizium, weitgehend verzichtet werden. Das Lotmaterial eignet sich dabei insbesondere für die Durchführung des erfindungsgemäßen Verfahrens.

Als Legierung kommt bspw. eine Superlegierung auf Nickel-, Kobalt- oder Eisenbasis in Frage, die zusätzlich wenigstens eines der Elemente Al, Ti, Ta, Cr, Co, Mo, W, Nb als Hauptlegierungselemente umfasst. Dabei kann der Anteil wenigstens eines der Elemente Al, Ti, Ta an der Legierung des Lotmaterials gegenüber seinem Anteil an der Superlegierung erhöht sein und/oder der Anteil des Elementes W an der Legierung des Lotmaterials gegenüber seinem Anteil an der Superlegierung verringert sein. Insbesondere kann die Superlegierung die folgende Zusammensetzung aufweisen:
2 bis 16 Gew.-% Cr
0 bis 15 Gew.-% Co
0 bis 3 Gew.-% Mo
0 bis 10 Gew.-% W
0 bis 12 Gew.-% Ta
0 bis 6 Gew.-% Re
0 bis 1 Gew.-% V
0 bis 0,5 Gew.-% Nb
0,05 bis 6,5 Gew.-% Al
0 bis 5 Gew.-% Ti
0 bis 0,2 Gew.-% Hf
Rest Ni

In der Legierung des Lotmaterials sind dann die Anteile an Ta und Ti gegenüber der Zusammensetzung der Superlegierung erhöht, woraus eine Herabsetzung der Schmelztemperatur des Lotmaterials gegenüber der Superlegierung resultiert.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
Fig. 1 zeigt beispielhaft eine Gasturbine in einem Längsteilschnitt.
Fig. 2 zeigt in perspektivischer Ansicht eine Laufschaufel oder Leitschaufel einer Strömungsmaschine.
Fig. 3 zeigt eine Brennkammer einer Gasturbine

Die Figuren 4 bis 7 zeigen ein Ausführungsbeispiel für das erfindungsgemäße Verfahren.

Fig. 8 zeigt die Abhängigkeit der Schmelztemperatur einer Legierung von ihrem Ti- bzw. Ta-Anteil.

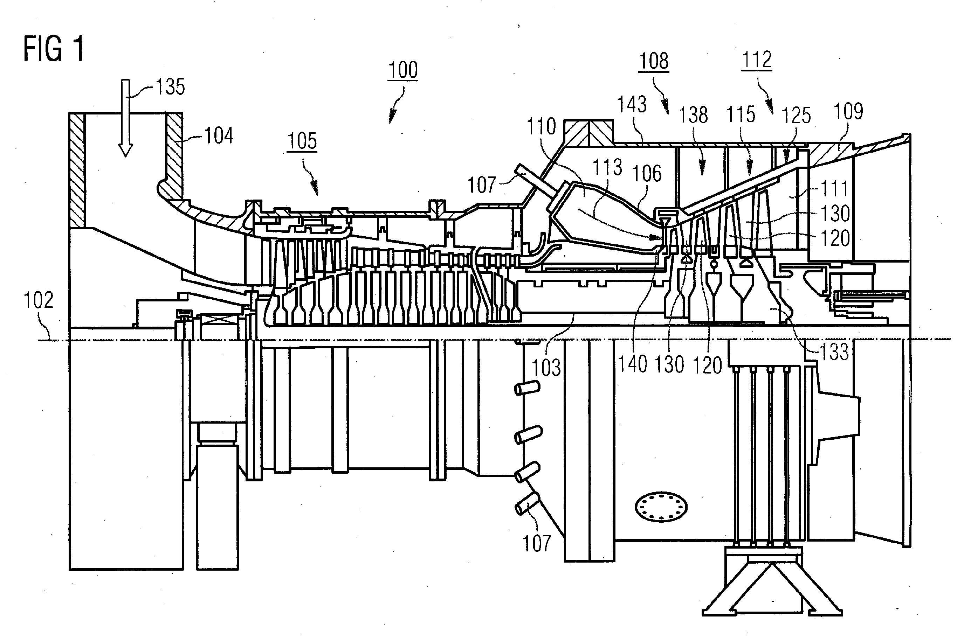

Die Figur 1 zeigt beispielhaft eine Gasturbine 100 in einem Längsteilschnitt. Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbe sondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1; EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

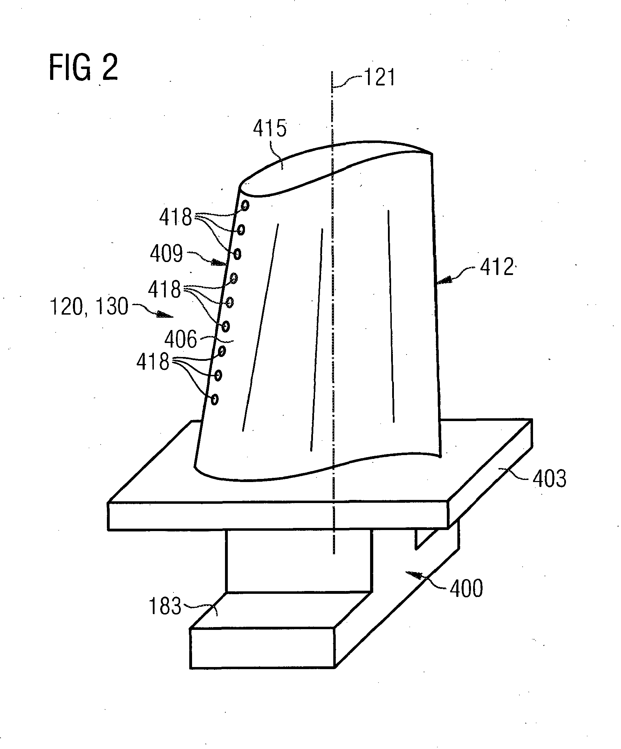

Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder stängelkristalliner Struktur werden als Bauteile für Maschinen eingesetzt, die im Betrieb hohen mechanischen, thermischen und/oder chemischen Belastungen ausgesetzt sind. Die Fertigung von derartigen einkristallinen oder stängelkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber nur wenige transversale Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt. Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie,hohl und weist ggf. noch Filmkühllöcher 418 (gestrichelt angedeutet) auf.

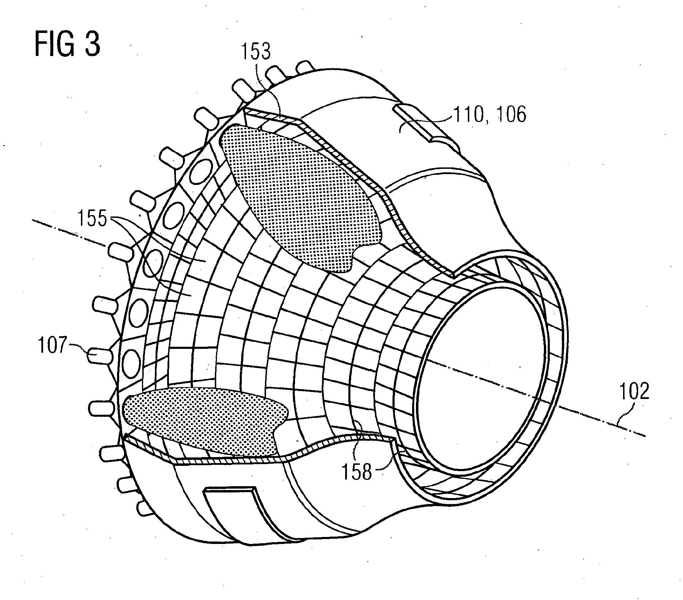

Die Figur 3 zeigt eine Brennkammer 110 einer Gasturbine. Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können keramische Bauteile, massive keramische Steine oder Legierungen,mit MCrAlX und/oder keramischen Beschichtungen sein. Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

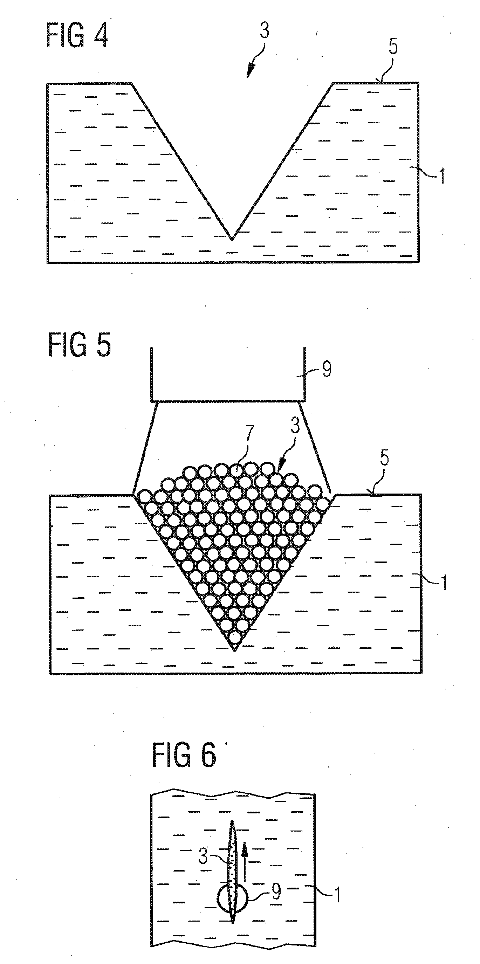

In Figur 4 ist in einer stark schematisierten Darstellung eine Gasturbinenschaufel 1 mit einem Riss 3 als zu reparierendem Bauteil dargestellt. Die Turbinenschaufel 1 ist aus einer unter der Bezeichnung PWA 1483 bekannten Superlegierung auf Nickelbasis hergestellt. Diese hat die folgende Zusammensetzung (alle Angaben in Gew.-%):
Cr: 12,2
Co: 9
Mo: 1, 9
W: 3, 8
Ti: 4,1
Ta: 5
C: 0,07
Rest Ni

Die Turbinenschaufel 1 kann jedoch grundsätzlich auch aus anderen Superlegierungen auf Nickel-, Kobalt- oder Eisenbasis bestehen, insbesondere aus solchen, die neben dem Hauptbestandteil Nickel (Ni) die Elemente Chrom (Cr), Wolfram (W), Molybdän (Mo), Aluminium (Al), Tantal (Ta) oder Rhenium (Rh) enthalten.
Weitere vorzugsweise verwendete Superlegierungen sind PWA1484 (/SX) und Rene N5 oder die CMSX-Werkstoffgruppe.

Die Superlegierung weist eine gerichtete Mikrostruktur mit einer vorteilhaften Orientierung auf, die in den Figuren 4 bis 6 durch waagrechte Striche angedeutet ist. Es sei an dieser Stelle angemerkt, dass bei einer stängelkristallinen Struktur eine Vorzugsrichtung der Kristallorientierung vorliegt, die jedoch keine streng eingehaltene Richtung darstellt. Vielmehr schwankt die tatsächliche Orientierung der einzelnen Körner der stängelkristallinen Struktur in der Regel um einige Grad um die Vorzugsrichtung. Eine derartige Schwankung bringt Vorteile bezüglich der Festigkeit des Materials mit sich. Der Riss 3 erstreckt sich von der Oberfläche 5 der Turbinenschaufel 1 ausgehend in die Superlegierung hinein. Zum Reparieren des Bauteils wird ein Lotmaterial 7 in Form eines pulverförmigen Legierungsmaterials in den Riss 3 eingefüllt. Die Turbinenschaufel 1 mit in den Riss 3 eingefülltem Lotmaterial 7 ist in Fig. 5 dargestellt.

Die Pulverpartikel des Legierungsmaterials weisen dieselben Legierungselemente wie die Superlegierung der Turbinenschaufel 1 auf. Jedoch ist der Anteil an Ti im Legierungsmaterial der Pulverpartikel gegenüber seinem Anteil in der Superlegierung der Turbinenschaufel 1 um wenigstens ca. 5 Gew.-% erhöht. Die übrigen Bestanteile der Pulverpartikel entsprechen in ihren Anteilen den Anteilen, die sie in der Superlegierung der Turbinenschaufel 1 besitzen. Aufgrund des erhöhten Titananteils an der Legierungszusammensetzung des Pulvers im Vergleich zur Legierungszusammensetzung der Superlegierung des Turbinenbauteils 1 ist die Schmelztemperatur des Lotmaterials 7 so weit herabgesetzt, dass die maximal mögliche Löttemperatur erreicht wird.

Eine Absenkung der Schmelztemperatur des Lotmateriales kann auch durch Variation der Gew.-%-Anteile anderer Bestandteile als Titan erreicht werden. So kann die Schmelztemperatur grundsätzlich verringert werden, wenn der Gew.-%-Anteil der Elemente Al, Ti, Ta an der Legierung des Lotmaterials 7 gegenüber dem Anteil an der Superlegierung erhöht ist und/oder der Anteil des Elementes W an der Legierung des Lotmaterials 7 gegenüber dem Anteil an der Superlegierung verringert ist. Durch geeignetes Auswählen der Gew.-%-Anteile dieser Elemente an der Legierung des Lotmaterials im Vergleich zu ihrem Anteil an der Superlegierung des Turbinenbauteils 1 kann die Schmelztemperatur des Lotmaterials 7 in einem breiten Bereich eingestellt werden. Durch geeignetes Optimieren der Zusammensetzung kann so ein Lotmaterial 7 zur Verfügung gestellt werden, dessen Elemente mit den Elementen der Legierung der zu reparierenden Turbinenschaufel 1 übereinstimmen und das eine Schmelztemperatur (Liquidustemperatur) aufweist, die kleiner oder gleich der maximalen Löttemperatur der Superlegierung ist.

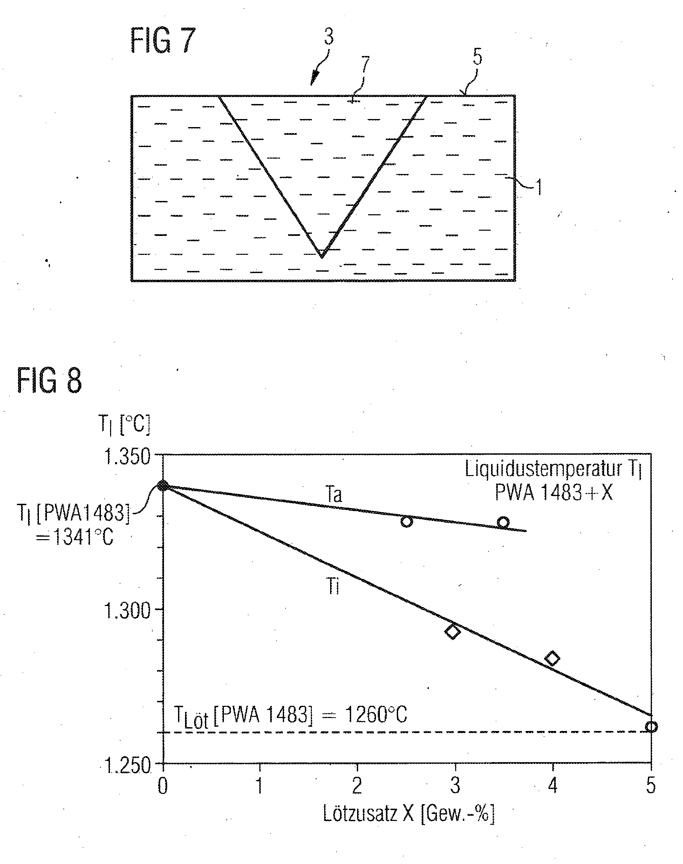

Der Einfluss bspw. der Legierungselemente Ti und Ta auf die Schmelztemperatur des Lotmaterials ist in Figur 8 dargestellt, welche die Schmelztemperatur der Legierung in Abhängigkeit vom Ti- bzw. Ta-Anteil zeigt.

Nach dem Einfüllen des Lotmaterials 7 in den Riss 3 erfolgt eine lokale Wärmeeinwirkung im Bereich des verfüllten Risses 3. Um die Wärmeeinwirkung auf das Lotmaterial 7 zu verwirklichen, ist im vorliegenden Ausführungsbeispiel ein Laser 9 vorhanden, welcher auf das aufzuschmelzende Lot einstrahlt und diesem so die zum Schmelzen nötige Wärme zuführt. Alternativ kann die Wärme jedoch auch induktiv oder mittels eines Elektronenstrahls zugeführt werden.

Während des Lötvorganges wird ein Temperaturgradient im Bereich des Risses 3 hergestellt. Dies erfolgt, indem die Turbinenschaufel 1 und der Laser 9 relativ zueinander bewegt werden. Im Ausführungsbeispiel wird der Laser 9 parallel zur Oberfläche 5 der Turbinenschaufel 1 über das Lot 7 geführt (vgl. Fig. 5 und 6). Die Geschwindigkeit und die Leistungsdichte, mit der das Führen des Lasers 9 über das Lotmaterial 7 erfolgt ist dabei derart gewählt, dass sich der gewünschte Temperaturgradient im Lotmaterial 7 einstellt. Der Temperaturgradient führt dabei zu einem gerichteten Erstarren des Lotmaterials, wenn sich dieses nach dem Aufschmelzen wieder abkühlt. Mit der Bewegungsgeschwindigkeit des Lasers relativ zur Turbinenschaufel 1 und/oder der Laserleistung kann die Steilheit des Temperaturgradienten eingestellt werden. Unter Steilheit des Temperaturgradienten soll hierbei die Zu- oder Abnahme der Temperatur pro Längeneinheit zu verstehen sein. Die zum Entstehen einer gerichteten Mikrostruktur im erstarrenden Lotmaterial führende Steilheit hängt insbesondere von der Zusammensetzung des Lotmaterials ab.

Die Bewegung des Lasers 9 im dargestellten Ausführungsbeispiel erinnert an einen Schweißprozess. Im Unterschied zu einem Schweißprozess wird das umgebende Basismaterial der Turbinenschaufel 1 jedoch nicht aufgeschmolzen.

Im vorliegenden Ausführungsbeispiel erstreckt sich die vorteilhafte Orientierung der gerichteten Mikrostruktur in der Superlegierung der Turbinenschaufel 1 in der Zeichenebene von links nach rechts. Um im erstarrenden Lotmaterial das Entstehen einer gerichteten Mikrostruktur zu induzieren, deren Orientierung mit der im Basismaterial übereinstimmt, erfolgt die Bewegung des Lasers 9 relativ zur Gasturbinenschaufel 1 senkrecht zur Vorzugsrichtung der gerichteten Mikrostruktur der Superlegierung, parallel zum Verlauf des Ermüdungsrisses 3 (vgl. Fig. 6). Ggf. kann der Laser 9 zusätzlich eine Pendelbewegung senkrecht zum Verlauf des Ermüdungsrisses 3 ausführen

Beim Wiedererstarren des Lotmaterials 7 wird dieses epiktaktisch an das umgebende Superlegierungsmaterial angebunden. Mit anderen Worten, das erstarrende Legierungsmaterial 7 führt die kristalline Struktur des angrenzenden Superlegierungsmaterials fort. Nachdem das Lotmaterial 7 wieder erstarrt ist, weist es daher dieselbe gerichtete Mikrostruktur wie die angrenzende Superlegierung auf. Auf diese Weise kann die kristalline Struktur des Superlegierungsmaterials in das erstarrende Legierungsmaterial hineinwachsen. Nachdem das Lotmaterial 7 wieder erstarrt ist, weist die Reparaturstelle daher dieselbe gerichtete Mikrostruktur wie das umgebende Superlegierungsmaterial auf. Dieser Zustand ist in Figur 7 angedeutet.

Statt einem kontinuierlichen Bewegen des Lasers 9 zum Herbeiführen eines Temperaturgradienten ist es auch möglich, die Laserstrahlen so aufzuweiten oder so pendeln zu lassen, dass der Laser beispielsweise das gesamte Lotmaterial bestrahlt und dieses gleichmäßig erwärmt. In diesem Fall kann durch geeignete Abfuhr der Wärme des Lotmaterials 7 in die umgebende Superlegierung ein Temperaturgradient entstehen. Die Temperatur ist dann an der äußeren Oberfläche des Lotmaterials 7 am höchsten und nimmt zur Grenzfläche des Lotmaterials 7 mit der Superlegierung der Turbinenschaufel 1 ab. Um eine geeignete Abfuhr der Wärme zu realisieren, kann die Turbinenschaufel 1 gegebenenfalls an geeigneten Stellen gekühlt oder erwärmt werden, sodass sich im Lotmaterial 7 der gewünschte Temperaturgradient einstellt.

Im vorliegenden Ausführungsbeispiel wurde das Aufschmelzen und Erstarrenlassen des Lotmaterials 7 mit Hilfe eines Temperaturgradienten herbeigeführt. Alternativ besteht jedoch auch die Möglichkeit, den Lötvorgang unter Verwendung eines Isothermen Lötverfahrens durchzuführen.

Das erfindungsgemäße Verfahren bietet nicht nur den Vorteil, dass auf die Beimischungen von Bor oder Silizium zum Lotmaterial 7 verzichtet werden kann, sondern ermöglicht es auch, Risse mit einer Breite von mehr als 200 µm so zu reparieren, dass das Lotmaterial nach seiner Verfestigung eine gerichtete Mikrostruktur aufweist, insbesondere dann, wenn im Verfahren ein Temperaturgradient Verwendung findet.

## Patentansprüche

1. Verfahren zum Reparieren von Bauteilen (1) aus einer Superlegierung mittels Löten,
insbesondere zum Reparieren von Bauteilen (1),
die aus einer Superlegierung mit einer gerichteten Mikrostruktur bestehen,
wobei die Superlegierung folgende Zusammensetzung aufweist:
2 bis 16 Gew.-% Cr
0 bis 15 Gew.-% Co
0 bis 3 Gew.-% Mo
0 bis 10 Gew.-% W
0 bis 12 Gew.-% Ta
0 bis 6 Gew.-% Re
0 bis 1 Gew.-% V
0 bis 0,5 Gew.-% Nb
0,05 bis 6,5 Gew.-% Al
0 bis 5 Gew.-% Ti
0 bis 0,2 Gew.-% Hf
0 bis 0,07 Gew.-% C
Rest Ni
wobei das Verfahren derart durchgeführt wird, dass eine reparierte Stelle ebenfalls eine gerichtete Mikrostruktur aufweist,
mit den Schritten:
- Versehen der zu reparierenden Stelle (3) mit einem Lotmaterial (7),
- Erwärmen der mit dem Lotmaterial (7) versehenen zu reparierenden Stelle (3) bis zum Schmelzen des Lotmaterials (7) und
- Erstarren lassen des geschmolzenen Lotmaterials (7), wobei das Lotmaterial (7) eine Legierung mit denselben Legierungskomponenten wie die Legierung des Bauteils (1) ist und wobei wenigstens der Anteil einer Legierungskomponente an der Zusammensetzung des Lotmaterials gegenüber seinem Anteil an der Zusammensetzung der Legierung des Bauteils (1) derart abgeändert ist,
dass in der Legierung des Lotmaterials (7) die Anteile entweder von Titan oder Titan und Tantal oder Titan und Aluminium gegenüber der Zusammensetzung der Superlegierung erhöht sind,
so dass die Schmelztemperatur des Lotmaterials gegenüber der Schmelztemperatur der Legierung des Bauteils (1) abgesenkt ist.

2. Verfahren nach Anspruch 1,
bei dem der Anteil des Elementes W an der Legierung des Lotmaterials (7) gegenüber seinem Anteil an der Superlegierung verringert ist.

3. Verfahren nach Anspruch 1,
bei dem die Superlegierung die folgenden Zusammensetzungen aufweist (in Gew.-%):
Cr: 12,2%
Co: 9%
Mo: 1,9%
W: 3,8%
Ti: 4,1%
Al: 3,6%
Ta: 5%
C: 0,07%
Rest Ni.

4. Verfahren nach einem der Ansprüche 1 bis 3,
in dem das Erstarrenlassen des geschmolzenen Lotmaterials (7) bei konstant gehaltener Temperatur erfolgt.

5. Verfahren nach einem der Ansprüche 1 bis 4,
in dem das Erstarrenlassen des geschmolzenen Lotmaterials (7) unter Verwendung eines Temperaturgradienten erfolgt.

6. Verfahren nach Anspruch 5,
in dem der Temperaturgradient derart ausgerichtet ist, dass er in derjenigen Richtung verläuft, in der ein epitaktisches Wachstum im Bereich der zu reparierenden Stelle herbeigeführt werden soll.

7. Verfahren nach Anspruch 5 oder 6,
in dem ein lokales Heizen mittels eines optischen oder induktiven Heizverfahrens oder eines Elektronenstrahlheizverfahrens erfolgt,
wobei die Heizquelle (9) und das Bauteil (1) relativ zueinander bewegt werden.

8. Mit Lotmaterial (7) gelötetes Bauteil,
insbesondere ein Bauteil aus einer Superlegierung mit einer gerichteten Mikrostruktur,
das aus einer Superlegierung besteht,
die folgende Zusammensetzung aufweist:
2 bis 16 Gew.-% Cr
0 bis 15 Gew.-% Co
0 bis 3 Gew.-% Mo
0 bis 10 Gew.-% W
0 bis 12 Gew.-% Ta
0 bis 6 Gew.-% Re
0 bis 1 Gew.-% V
0 bis 0,5 Gew.-% Nb
0,05 bis 6,5 Gew.-% Al
0 bis 5 Gew.-% Ti
0 bis 0,2 Gew.-% Hf
0 bis 0,07 Gew.-% C
Rest Ni,
wobei die Legierung des Lotmaterials (7) Legierungskomponenten wie die Legierung des Bauteils (1) aufweist und in dem wenigstens der Anteil einer Legierungskomponente an der Zusammensetzung des Lotmaterials (7) gegenüber seinem Anteil an der Zusammensetzung der Legierung des Bauteils (1) derart abgeändert ist,
dass in der Legierung des Lotmaterials (7) die Anteile entweder von Titan oder Titan und Tantal oder Titan und Aluminium gegenüber der Zusammensetzung der Superlegierung erhöht sind,
so dass die Schmelztemperatur des Lotmaterials gegenüber der Schmelztemperatur der Legierung des Bauteils (1) abgesenkt ist.

9. Bauteil nach Anspruch 8,
in dem der Anteil des Elementes W an der Legierung des Lotmaterials (7) gegenüber seinem Anteil an der Superlegierung verringert ist.

10. Bauteil nach Anspruch 8,
indem die Superlegierung die folgenden Zusammensetzungen aufweist (in Gew.-%) :
Cr: 12,2%
Co: 9%
Mo: 1,9%
W: 3,8%
Ti: 4,1%
Al: 3,6%
Ta: 5%
C: 0,07%
Rest Ni.

## Claims

1. Method for repairing components (1) made of a superalloy by means of soldering,
in particular for repairing components (1),
which consist of a superalloy having a directional microstructure,
wherein the superalloy has the following composition:
from 2 to 16 wt.% Cr
from 0 to 15 wt.% Co
from 0 to 3 wt.% Mo
from 0 to 10 wt.% W
from 0 to 12 wt.% Ta
from 0 to 6 wt.% Re
from 0 to 1 wt.% V
from 0 to 0.5 wt.% Nb
from 0.05 to 6.5 wt.% Al
from 0 to 5 wt.% Ti
from 0 to 0.2 wt.% Hf
from 0 to 0.07 wt.% C
remainder Ni,
wherein the method is carried out such that a repaired site likewise has a directional microstructure,
having the steps:
- providing the site (3) to be repaired with a solder material (7),
- heating the site (3) to be repaired, provided with the solder material (7), until the solder material (7) melts and
- allowing the molten solder material (7) to solidify,
the solder material (7) being an alloy having the same alloy constituents as the alloy of the component (1),
and at least the proportion of an alloy constituent in the composition of the solder material being modified relative to its proportion in the composition of the alloy of the component (1) such that
the proportions either of titanium or titanium and tantalum or
titanium and aluminium in the alloy of the solder material (7) are increased relative to the composition of the superalloy,
so that the melting temperature of the solder material is lowered relative to the melting temperature of the alloy of the component (1).

2. Method according to Claim 1,
wherein the proportion of the element W in the alloy of the solder material (7) is reduced relative to its proportion in the superalloy.

3. Method according to Claim 1,
wherein the superalloy has the following compositions (in wt.%):
Cr: 12.2%
Co: 9%
Mo: 1.9%
W: 3.8%
Ti: 4.1%
Al: 3.6%
Ta: 5%
C: 0.07%
remainder Ni.

4. Method according to one of Claims 1 to 3,
wherein the molten solder material (7) is allowed to solidify with a temperature kept constant.

5. Method according to one of Claims 1 to 4,
wherein the molten solder material (7) is allowed to solidify with the use of a temperature gradient.

6. Method according to Claim 5,
wherein the temperature gradient is aligned so that it extends in the direction in which epitaxial growth is intended to be induced in the region of the site to be repaired.

7. Method according to Claim 5 or 6,
wherein local heating is carried out by means of an optical or inductive heating method or an electron beam heating method, the heat source (9) and the component (1) being moved relative to one another.

8. Component soldered with solder material (7),
in particular a component made of a superalloy having a directional microstructure,
which consists of a superalloy
which has the following composition:
from 2 to 16 wt.% Cr
from 0 to 15 wt.% Co
from 0 to 3 wt.% Mo
from 0 to 10 wt.% W
from 0 to 12 wt.% Ta
from 0 to 6 wt.% Re
from 0 to 1 wt.% V
from 0 to 0.5 wt.% Nb
from 0.05 to 6.5 wt.% Al
from 0 to 5 wt.% Ti
from 0 to 0.2 wt.% Hf
from 0 to 0.07 wt.% C
remainder Ni,
wherein the alloy of the solder material (7) has alloy constituents like the alloy of the component (1) and in which at least the proportion of an alloy constituent in the composition of the solder material (7) is modified relative to its proportion in the composition of the alloy of the component (1) such that
the proportions either of titanium or titanium and tantalum or
titanium and aluminium in the alloy of the solder material (7) are increased relative to the composition of the superalloy,
so that the melting temperature of the solder material is lowered relative to the melting temperature of the alloy of the component (1).

9. Component according to Claim 8,
wherein the proportion of the element W in the alloy of the solder material (7) is reduced relative to its proportion in the superalloy.

10. Component according to Claim 8,
wherein the superalloy has the following compositions (in wt.%):
Cr: 12.2%
Co: 9%
Mo: 1.9%
W: 3.8%
Ti: 4.1%
Al: 3.6%
Ta: 5%
C: 0.07%
remainder Ni.

## Revendications

1. Procédé de réparation de pièces ( 1 ) en un superalliage au moyen d'une brasure,
notamment pour la réparation de pièces ( 1 ),
qui sont constituées d'un superalliage ayant une microstructure dirigée,
dans lequel le superalliage a la composition suivante :
de 2 à 16% en poids de Cr
de 0 à 15% en poids de Co
de 0 à 3% en poids de Mo
de 0 à 10% en poids de W
de 0 à 12% en poids de Ta
de 0 à 6% en poids de Re
de 0 à 1% en poids de V
de 0 à 0,5% en poids de Nb
de 0,5 à 6,5% en poids de Al
de 0 à 5% en poids de Ti
de 0 à 0,2% en poids de Hf
de 0 à 0,07% en poids de C
le reste étant du Ni,
dans lequel on effectue le procédé de manière à ce qu'un endroit réparé ait également une microstructure dirigée,
comprenant les stades dans lesquels :
- on munit l'endroit ( 3 ) à réparer d'une matière ( 7 ) de brasure,
- on chauffe l'endroit ( 3 ) à réparer muni de la matière
( 7 ) de brasure jusqu'à la fusion de la matière ( 7 ) de brasure et
- on laisse se solidifier la matière ( 7 ) de brasure fondue, la matière ( 7 ) de brasure étant un alliage ayant les mêmes constituants d'alliage que l'alliage de la pièce ( 1 ), et au moins la proportion d'un constituant de l'alliage, dans la composition de la matière de brasure par rapport à sa proportion dans la composition de l'alliage de la pièce ( 1 ), étant modifiée,
de manière à augmenter, dans l'alliage de la matière ( 7 ) de brasure, les proportions de titane ou de titane et de tantale ou de titane et d'aluminium par rapport à la composition du superalliage,
de manière à abaisser le point de fusion de la matière de brasure par rapport au point de fusion de l'alliage de la pièce ( 1 ).

2. Procédé suivant la revendication 1,
dans lequel on diminue la proportion de l'élément W dans l'alliage de la matière ( 7 ) de brasure par rapport à sa proportion dans le superalliage.

3. Procédé suivant la revendication 1,
dans lequel le superalliage a les compositions suivantes ( en pourcentage en poids ) :
Cr : 12,2%
Co : 9%
Mo: 1,9%
W : 3,8%
Ti : 4,1%
Al : 3,6%
Ta : 5%
C : 0,07%
le reste étant du Ni.

4. Procédé suivant l'une des revendications 1 à 3, dans lequel on laisse se solidifier la matière ( 7 ) de brasure fondue à une température maintenue constante.

5. Procédé suivant l'une des revendications 1 à 4,
dans lequel on laisse se solidifier la matière ( 7 ) de brasure fondue en utilisant un gradient de température.

6. Procédé suivant la revendication 5,
dans lequel on dirige le gradient de température de manière à ce qu'il s'étende dans la direction dans laquelle une croissance épitaxiale doit être provoquée dans la partie de l'endroit à réparer.

7. Procédé suivant la revendication 5 ou 6,
dans lequel on effectue un chauffage local au moyen d'un procédé de chauffage optique ou par induction ou d'un procédé de chauffage par un faisceau d'électrons,
la source ( 9 ) de chauffage et la pièce ( 1 ) étant déplacés l'un par rapport à l'autre.

8. Pièce brasée par de la matière ( 7 ) de brasure, notamment pièce en un superalliage ayant une microstructure dirigée,
qui est constituée en un superalliage,
qui a la composition suivante :
de 2 à 16% en poids de Cr
de 0 à 15% en poids de Co
de 0 à 3% en poids de Mo
de 0 à 10% en poids de W
de 0 à 12% en poids de Ta
de 0 à 6% en poids de Re
de 0 à 1% en poids de V
de 0 à 0,5% en poids de Nb
de 0,5 à 6,5% en poids de Al
de 0 à 5% en poids de Ti
de 0 à 0,2% en poids de Hf
de 0 à 0,07% en poids de C
le reste étant du Ni,
dans laquelle l'alliage de la matière ( 7 ) de brasure a des constituants d'alliage comme l'alliage de la pièce ( 1 ) et dans laquelle au moins la proportion d'un constituant d'alliage dans la composition de la matière ( 7 ) de brasure est modifiée par rapport à sa proportion dans la composition de l'alliage de la pièce ( 1 ),
de manière à augmenter, dans l'alliage de la matière ( 7 ) de brasure, les proportions de titane ou de titane et de tantale ou de titane et d'aluminium par rapport à celles de la composition du superalliage,
de manière à baisser le point de fusion de la matière de brasure par rapport au point de fusion de l'alliage de la pièce ( 1 ).

9. Pièce suivant la revendication 8,
dans laquelle la proportion de l'élément W dans l'alliage de la matière ( 7 ) de brasure est diminuée par rapport à sa proportion dans le superalliage.

10. Pièce suivant la revendication 8,
dans laquelle le superalliage a les compositions suivantes ( en pourcentage en poids ) :
Cr : 12, 2%
Co : 9%
Mo: 1,9%
W : 3,8%
Ti : 4,1%
Al : 3,6%
Ta : 5%
C : 0,07%
le reste étant du Ni.
